Europäisches Patentamt

European Patent Office

Office européen des brevets

(19)

(11) Veröffentlichungsnummer : **0 368 066 B1**

(12) # EUROPÄISCHE PATENTSCHRIFT

(45) Veröffentlichungstag der Patentschrift :
**19.08.92 Patentblatt 92/34**

(51) Int. Cl.$^5$ : **C01G 37/14**

(21) Anmeldenummer : **89119582.8**

(22) Anmeldetag : **21.10.89**

(54) **Verfahren zur Herstellung von Natriumdichromat.**

(30) Priorität : **03.11.88 DE 3837266**

(43) Veröffentlichungstag der Anmeldung :
**16.05.90 Patentblatt 90/20**

(45) Bekanntmachung des Hinweises auf die
Patenterteilung :
**19.08.92 Patentblatt 92/34**

(84) Benannte Vertragsstaaten :
**DE ES GB IT**

(56) Entgegenhaltungen :
**EP-A- 0 047 799**
**DE-B- 1 093 338**
**DE-B- 1 173 884**
**DE-B- 1 205 508**
**DE-C- 113 086**
**CHEMISCHE TECHNOLOGIE, Band 2, Auflage**
**4, 1982, Seiten 657-664**

(73) Patentinhaber : **BAYER AG**
**W-5090 Leverkusen 1 Bayerwerk (DE)**

(72) Erfinder : **Weber, Rainer, Dr.**
**Heymannstrasse 36**
**W-5090 Leverkusen 1 (DE)**
Erfinder : **Rosenow, Bernd**
**Ringstrasse 18**
**W-5090 Leverkusen 1 (DE)**
Erfinder : **Block, Hans-Dieter, Dr.**
**Biesenbach 49**
**W-5090 Leverkusen 3 (DE)**
Erfinder : **Lönhoff, Norbert, Dr.**
**Paul-Klee-Strasse 60**
**W-5090 Leverkusen 1 (DE)**

EP 0 368 066 B1

## Beschreibung

Die Erfindung betrifft ein Verfahren zur Herstellung von Natriumdichromat und Natriumdichromatlösungen,

Gemäß Winnacker-Küchler, Chemische Technologie, Band 2, 4, Auflage, 1982, S, 657 bis S. 664 erfolgt die Herstellung von Natriumdichromat durch alkalisch oxidierenden Aufschluß von Chromerz mit Soda und/oder Natriumhydroxid und Luftsauerstoff. Als Brennstoffe werden für diesen Prozeß Erdgas, Schweröl oder auch Kohlenstaub eingesetzt.

Durch Auslaugen des den Aufschlußofen verlassende Ofenklinkers mit Wasser, Einstellen des pH-Wertes der Maische auf 7 bis 9,5 und Abtrennung der unlöslichen Bestandteile durch Filtration wird eine Natriummonochromatlösung mit einem Gehalt von 300 bis 500 g/l $Na_2CrO_4$ erhalten. Die Einstellung des pH-Wertes erfolgt dabei in der Regel mit Schwefelsäure und/oder mit Natriumdichromatlösung.

Zur Herstellung von Natriumdichromat werden die Monochromationen der Lösung entweder durch Ansäuerung mit Kohlendioxid unter Druck oder durch elektrolytische Ansäuerung in Dichrromationen umgewandelt. Bei der Ansäuerung mit Schwefelsäure entsteht Natriumsulfat, das beim Einengen der Lösung auf ca. 70 Gew.-% $Na_2Cr_2O_7 \cdot 2 H_2O$ bis auf einen Restgehalt von ca. 0,5 Gew.-% ausfällt.

Zur Ansäuerung mit Kohlendioxid wird die Natriummonochromatlösung auf eine Konzentration von 750 bis 1000 g/l $Na_2CrO_4$ eingeengt und in Autoklaven durch Zufuhr von Kohlendioxid bei einem Druck von 4 bis 15 bar unter Kühlung mit Kohlensäure gesättigt. Unter Ausfällung von Natriumhydrogencarbonat wird dabei eine etwa 80 bis 90 %ige Umwandlung von Monochromotionen in Dichromationen erreicht. Der restliche Umsatz bis zu 95 bis 100 % kann in einer weiteren Stufe nach Aufkonzentrieren auf 1300 g/l $Na_2CrO_4$ (bereits gebildetes $Na_2CrO_7 \cdot 2 H_2O$ in $Na_2CrO_4$-Äquivalenten ausgedrückt) durch Zufuhr von Kohlendioxid erfolgen. Es ist auch möglich, den restlichen Umsatz mit Schwefelsäure, Chromsäure oder durch Elektrolyse auszuführen.

Die elektrolytische Ansäuerung erfolgt gemäß US-A 3 305 463 durch Einleiten der Natriummonochromatlösung bzw. der zu 80 bis 90 % in Natriumdichromat umgewandelten Natriummonochromatlösung in den Anodenraum einer mit einer Kationenaustauschermembran versehenen Elektrolysezelle. Während der Elektrolyse wandern Natriumionen durch die Membran in den mit Wasser oder einer wäßrigen Lösung gefüllten Kathodenraum der Zelle. Dabei bilden die Natriumionen mit den an der Kathode unter Wasserstoffentwicklung gebildeten Hydroxidionen eine wäßrige natriumhydroxidhaltige Lösung. Im Anodenraum werden die Monochromationen durch die unter gleichzeitiger Sauerstoffentwicklung an der Anode gebildeten Wasserstoffionen in Dichromationen umgewandelt.

Zur Erzeugung von Natriumdichromatkristallen werden die bei den genannten Verfahren erhältlichen Natriumdichromatlösungen durch Verdampfen von Wasser eingeengt. Das dabei kristallisierende Natriumdichromat wird abgetrennt und getrocknet.

Die bei den beschriebenen Verfahren erhältlichen Natriumdichromatkristalle bzw. -lösungen enthalten in allen Fällen, insbesondere bei der Herstellung unter Ansäuerung mit Schwefelsäure und bei Verwendung von schwefelhaltigen Brennstoffen bei direkter Beheizung des Aufschlußofens bei den anderen Herstellverfahren, Restmengen von bis zu 0,5 Gew.-% Natriumsulfat.

Solche Natriumdichromatlösungen bzw. Natriumdichromatkristalle sind aufgrund ihres Natriumsulfatgehaltes für einige Einsatzzwecke wie beispielsweise der Herstellung von hochreinen Chromverbindungen und -pigmenten, von hochreinem Chrommetall und der elektrolytischen Herstellung von Chromsäure weniger bzw. gar nicht geeignet.

Zur Herstellung von im wesentlichen sulfatfreiem Natriumdichromat wird in der DE-B 1 093 338 vorgeschlagen, nach der Ansäuerung mit Schwefelsäure die Natriumdichromatlösung auf einen Gehalt von ca. 70 Gew.% $Na_2Cr_2O_7 . 2 H_2O$ einzuengen, wobei der Hauptanteil des darin enthaltenen Natriumsulfats auskristallisiert und abgetrennt werden kann. Die verbleibende Natriumdichromatlösung wird anschließend auf einen Gehalt von 67 bis 68 Gew.-% $Na_2Cr_2O_7 . 2 H_2O$ durch Wasserzugabe eingestellt und auf Temperaturen von -7 bis etwa -23°C abgekühlt. Hierbei kristallisieren sulfathaltige Anteile der Lösung aus, die dann aus der abgekühlten Lösung durch Filtration abgetrennt werden. Nach der Filtration werden Natriumdichromatlösungen erhalten, die weniger als 0,1 Gew.-% Natriumsulfat, bezogen auf das Gewicht von $Na_2Cr_2O_7 . 2 H_2O$, in der Lösung enthalten. Durch Einengen dieser Lösung und Kristillisation werden Natriumdichromatkristalle mit geringen Sulfatgehalten - gemäß Beispiel 5 0,015 Gew.-% $Na_2SO_4$, entspricht 101 ppm $SO_4^{2-}$ - erhalten.

Dieses Verfahren hat den Nachteil, daß Natriumdichromatlösungen mit geringeren $Na_2Cr_2O_7 . 2 H_2O$-Gehalten nicht oder nur unzureichend von Natriumsulfat befreit werden können.

Die vorliegende Erfindung beschreitet nun einen anderen einfachen Weg zur Herstellung von Natriumdichromatkristallen und -lösungen mit geringem Sulfatgehalt, wobei die Restgehalte an Sulfat der nach dem in der DE-B 1 093 338 beschriebenen Verfahren erhältliche Produkte teils noch unterschritten werden. Es wurde nämlich überraschend gefunden, daß durch Abkühlung von Natriumdichromatlösungen mit Anteilen an Natri-

2

ummonachromat von mehr als 1 Gew.-% $Na_2CrO_4$ auf -5 bis -25°C Sulfatrestgehalte deutlich unter 100 ppm $SO_4^{2-}$ erreicht werden können, wobei auch Lösungen mit Natriumdichromatgehalten von lediglich 50 bis 66 Gew.-% ($Na_2CrO_4$-Anteile als $Na_2Cr_2O_7$ . $2\,H_2O$-Äquivalente berechnet) vom Natriumsulfat im wesentlichen befreit werden können. Solche Lösungen mit Natriummonochromatanteilen werden beispielsweise in technischen Verfahren bei der Ansäuerung mit Kohlendioxid unter Druck in der ersten Stufe erhalten, wo ca. 80 bis 90 % der Monochromationen in Dichromationen umgewandelt werden.

Gegenstand der Erfindung ist ein Verfahren zur Herstellung von Natriumdichromat und Natriumdichromatlösungen durch alkalischen, oxidierenden Aufschluß von Chromerzen, Auslaugen des erhaltenen Ofenklinkers mit Wasser, Einstellen des pH-Wertes auf 7 bis 9,5, Abtrennung der unlöslichen Bestandteile durch Filtration, wobei eine Natriummonochromatlösung mit 300 bis 500 g/l $Na_2CrO_4$ erhalten wird, gegebenenfalls Entfernung mehrwertiger Kationen und des Vanadins nach bekannten Verfahren, Umwandlung der Monochromationen dieser Lösung in Dichromationen durch Zugabe einer Säure und/oder durch Elektrolyse und/oder durch Umsetzung mit Kohlendioxid unter Druck gegebenenfalls und Kristallisation von Natriumdichromat durch Einengen dieser Lösung, welches dadurch gekennzeichnet ist, daß die Natriummonochromatlösung vor der Umwandlung in eine Natriumdichromatlösung auf Gehalte von 700 bis 1000 g/l $Na_2CrO_4$ eingeengt wird, die Monochromationen dann zu 75 bis 98 % in Dichromationen umgewandelt werden, die Lösung anschließend durch Abkühlung auf eine Temperatur unter 0°C und Filtration weitestgehend von Natriumsulfat befreit wird und in der verbleibenden Lösung die restlichen Monochromationen durch Elektrolyse und/oder durch Umsetzung mit Chromsäure und/oder Umsetzung mit Kohlendioxid, gegebenenfalls nach Einengen der Lösung, in Dichromationen umgewandelt werden.

In einer bevorzugten Ausführungsform des erfindungsgegemäßen Verfahrens erfolgt die Natriumsulfatentfernung durch Abkühlen auf Temperaturen von -5°C bis -25°C.

Es ist vorteilhaft, wenn die Umwandlung der Monochromationen in Dichromationen der auf Gehalte von 700 bis 1000 g/l $Na_2CrO_4$ eingeengten Natriummonochromatlösung zu 80 bis 95 % erfolgt.

Besonders bevorzugt ist eine Variante des erfindungsgemäßen Verfahrens, in der die Umwandlung der Monochromationen in Dichromationen der auf Gehalte von 700 bis 1000 g/l $Na_2CrO_4$ eingeengten Natriummonochromatlösung durch Umsetzung mit Kohlendioxid unter Druck ausgeführt wird und nach Abkühlung und Filtration die restlichen in der Lösung anwesenden Monochromationen durch Elektrolyse in Dichromationen umgewandelt werden.

Die nach dem erfindungsgemäßen Verfahren erhältlichen Natriumdichromatkristalle und -lösungen zeichnen sich durch sehr niedrige Sulfatgehalte aus, wobei Werte unter 0,025 Gew.-% Natriumsulfat bezogen auf das Gewicht von $Na_2Cr_2O_7$ . $2\,H_2O$ in der Lösung sowie in den Kristallen erreicht werden können.

Solche Produkte sind hervorragend zur Herstellung von hochreinen Chrompigmenten, von hochreinem Chrommetall, von hochreinen Chromverbindungen sowie zur elektrolytischen Herstellung von hochreiner Chromsäure geeignet.

Die elektrolytische Herstellung von Chromsäure erfolgt gemäß der CA-A-739 447 in durch Kationenaustauschermembranen getrennten Elektrolysezellen. In die Anodenräume der Zellen wird eine Lösung von Natriumdichromat eingeleitet und in eine chromsäurehaltige Lösung umgewandelt, indem Natriumionen selektiv durch die Membran in den Kathodenraum überführt werden.

Im Lauf der Umwandlung der Natriumdichromatlösung in eine steigende Menge an Chromsäure enthaltende Natriumdichromatlösung wird die Wanderung der Natriumionen durch die Membran zunehmend begleitet von der Wanderung der im Anodenabteil gebildeten Wasserstoff-Ionen, so daß die Nutzung des elektrischen Stroms für den erwünschten Vorgang der Natrium-Entfernung aus dem Anodenabteil, auch Stromausbeute genannt, stetig zurückgeht. Das bedeutet, daß eine vollständige Umwandlung des Natriumdichromats in Chromsäure im Anodenabteil nicht möglich ist und aus wirtschaftlichen Gründen nur ein mittlerer Umwandlungsgrad angesteuert wird. Die Chromsäure muß sodann aus diesen Lösungen durch fraktionierte Kristallisation abgetrennt werden. Es verbleibt eine Mutterlauge, die das elektrochemisch noch nicht umgewandelte Natriumdichromat und Reste nicht auskristallisierter Chromsäure enthält. Diese Lösung wird sinnvollerweise zur weiteren Umwandlung in Chromsäure wieder in den Elektrolyseprozeß eingesetzt.

Aus diesem Verfahrensprinzip resultiert folgendes Problem: Sulfate und andere Verunreinigungen, die mit der Natriumdichromatlösung eingetragen werden, werden im System angesammelt und letztendlich mit den und in den Chromsäurekristallen ausgetragen. Dies führt bei Einsatz von technischen Natriumdichromatlösungen dazu, daß die nach diesem Verfahren erhältliche Chromsäure insbesondere mit Sulfaten stark verunreinigt ist. Bei Einsatz von erfindungsgemäß hergestellten Natriumdichromatlösungen, die nur geringe Anteile an Sulfat enthalten, wird dagegen eine sehr reine, nahezu sulfatfreie Chromsäure erhalten.

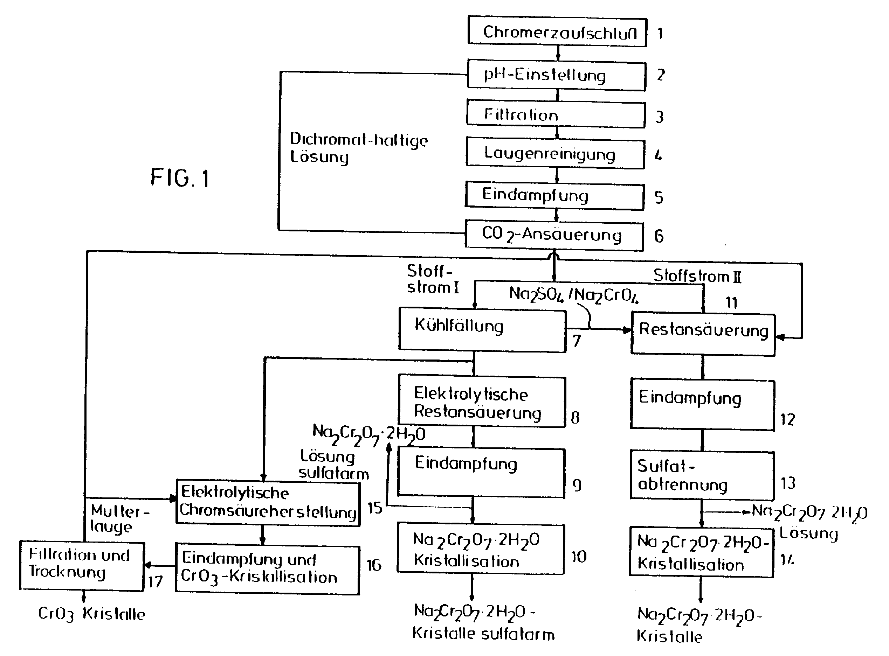

Das erfindungsgemäße Verfahren wird anhand Fig. 1 näher erläutert. Die in Fig. 1 beschriebene Variante des erfindungsgemäßen Verfahrens stellt eine besonders vorteilhafte Ausführungsform dar:

Chromerz wird durch alkalisch oxidativen Aufschluß mit Soda und Luftsauerstoff bei 1000 bis 1100°C in Gegenwart eines Magerungsmittels in einem Drehrohrofen aufgeschlossen (1). Der dabei entstehende Ofenklinker wird anschließend mit Wasser oder verdünnter Chromatlösung gelaugt und mit Natriumdichromat-haltiger Lösung auf einen pH-Wert zwischen 7 und 9,5 eingestellt (2). Dabei werden lösliche Alkaliverbindungen des Eisens, Aluminiums und Siliciums in unlösliche und gut filtrierbare Hydroxide bzw. Oxidhydrate umgewandelt, die gemeinsam mit den unlöslichen Bestandteilen des Ofenklinkers abgetrennt werden (3). Die entstandene Natriummonochromatlösung mit einem Gehalt von 300 bis 500 g/l an $Na_2CrO_4$ wird dann, wie in der EP-A-47799 beschrieben, durch Zugabe von Calciumoxid bei pH-Werten von 10 bis 13 von gelöstem Vanadat befreit. Die nun calciumhaltige Lösung wird durch Zusatz bzw. in situ-Erzeugung von Natriumcarbonat durch Fällung als Carbonate von der Hauptmenge an Erdalkaliionen und anderen mehrwertigen Kationen befreit (4). Die Fällung wird dabei vorzugsweise bei Temperaturen von 50 bis 100°C, bei pH-Werten zwischen 8 und 12 und mit einem ca. 2 bis 10fachen molaren Carbonatüberschuß, bezogen auf die Menge an Erdalkaliionen, durchgeführt. Nach der Filtration wird eine von mehrwertigen Kationen bis auf zusammengenommen weniger als 5 mg/l befreite Natriummonochromatlösung erhalten. In dieser Lösung kann mit Hilfe geeigneter Selektiv-Kationenaustauscher der Gehalt an mehrwertigen Kationen noch weiter herabgesetzt werden. Die Natriummonochromatlösung wird anschließend durch ein- oder mehrstufige Verdampfung auf Gehalte von 750 bis 1000 g/l an $Na_2CrO_4$ eingeengt (5).

In der nunmehr konzentrierten Lösung wird durch einstufige oder mehrstufige Zufuhr von Kohlendioxid bis zu einem Enddruck von 4 - 15 bar bei einer Endtemperatur nicht über 50°C ein pH-Wert unter 6,5 eingestellt und auf diese Weise unter Ausfällung von Natriumhydrogencarbonat eine 80 bis 95 %ige Umwandlung des Natriumchromats in Natriumdichromat erreicht (6).

Aus der entstehenden Suspension wird unter weiterbestehendem Kohlendioxid-Druck das Natriumhydrogencarbonat abgetrennt oder aber nach dem Entspannen das Natriumhydrogencarbonat vor seiner Rückreaktion mit dem Natriumdichromat rasch abgetrennt.

Die resultierende, vom Natriumhydrogencarbonat abgetrennte Natriummonochromat-/Natriumdichromat-Lösung wird nach Entnahme eines Teilstroms für die pH-Einstellung des gelaugten Ofenklinkers nunmehr in zwei Stoffströme geteilt. Stoffstrom I zeigt die Herstellung von im wesentlichen von Sulfat befreiten Natriumdichromatlösungen und -kristallen; Stoffstrom II beschreibt die Herstellung von Natriumdichromatlösungen und -kristallen in der üblichen technischen Qualität.

Die Natriumdichromatlösung des Stoffstroms I wird in einem mit Rührer ausgestatteten Gefäß auf -5 bis -20°C abgekühlt und nach einer Verweilzeit von 5 bis 60 Minuten durch Filtration von anfallendem Natriumsulfat befreit (7). Bei diesem Verfahrensschritt fällt neben dem Natriumsulfat auch die Hauptmenge des Natriummonochromats der Lösung aus, wobei eine Lösung mit weniger als 0,03 Gew.-% Natriumsulfat und weniger als 3 Gew.-% Natriummonochromat erhalten wird. Neben dem Effekt der Sulfatentfernung wird bei der Abkühlung demnach auch eine Ansäuerung der Lösung durch Ausfällung von Natriummonochromat erreicht, wobei in der Regel Lösungen erhalten werden, in denen 98 bis 99 % des Chromats als Dichromat vorliegen. In der nunmehr erhaltenen Lösung werden die Monochromatanteile elektrolytisch in Dichromat umgewandelt (8). Dazu wird die Lösung in die Anodenräume von mit Kationenaustauschermembranen versehenen Elektrolysezellen mit einer solchen Geschwindigkeit eingeleitet, daß die Monochromatanteile vollständig in Dichromat umgewandelt werden. In den Kathodenräumen der Elektrolysezellen wird unter Wasserstoffentwicklung eine alkalische Natriumionen-haltige Lösung, beispielsweise eine Natriumhydroxidlösung, erhalten. Diese Lösung wird, gegebenenfalls nach Einengen, bei der pH-Einstellung zur Reinigung der Natriummonochromatlösung (4) und bei der Sodaherstellung aus dem bei der Kohlendioxidansäuerung entstehenden Natriumhydrogencarbonat eingesetzt.

Die resultierende, weitgehend von Sulfat befreite Natriumdichromatlösung kann nun, gegebenenfalls nach Aufkonzentrierung auf ca. 60 bis 70 Gew.-% $Na_2Cr_2O_7 . 2 H_2O$ für verschiedene Anwendungszwecke, beispielsweise Oxidationen von organischen Stoffen, eingesetzt werden.

Zur Herstellung von Natriumdichromatkristallen wird die Lösung auf ca. 1650 g/l eingedampft (9) und anschließend auf 30 bis 40°C abgekühlt (10). Dabei fällt Natriumdichromat in Form van $Na_2Cr_2O_7 . 2 H_2O$-Kristallen aus, die nur geringe Mengen an Sulfat enthalten. Es ist vorteilhaft, das Eindampfen der Lösung sowie die Natriumdichromatkristallisation kontinuierlich durchzuführen. Die Kristalle werden anschließend in Schleudern von der Mutterlauge getrennt und bei Temperaturen von ca. 70 bis 85°C getrocknet.

Der Natriumsulfat- und Natriummonochromat-haltige Rückstand aus der Kühlfällung (7) im Stoffstrom I wird - gegebenenfalls nach Anmaischen mit Wasser - der Natriumdichromatlösung des Stoffstroms II beigemischt und gemeinsam mit dieser der Restansäuerung (11) zugeführt. Diese Restansäuerung kann beispielsweise durch Elektrolyse und/oder durch Versetzen mit Schwefelsäure erfolgen. Wenn, wie in Fig. 1 dargestellt, die Natriumdichromatherstellung mit der elektrolytischen Herstellung von Chromsäure verbunden ist, kann zur vollständigen bzw. teilweisen Restansäuerung auch ein Teil der Mutterlauge aus der Chromsäurefiltration (17) verwendet werden. Die nach der Restansäuerung (11) erhaltene Lösung wird anschließend zur Erzeugung von Natriumdichromatlösung auf ca. 60 bis 70 Gew.-% $Na_2Cr_2O_7 \cdot 2H_2O$ eingeengt und beispielsweise mit Drucknutschen von ausgefallenem Natriumsulfat befreit (13). Zur Herstellung von Natriumdichromatkristallen wird die Lösung auf ca. 1650 g $Na_2Cr_2O_7 \cdot 2H_2O$ eingeengt, mittels Drucknutschen von ausgefallenem Natriumsulfat befreit und analog zum Stoffstrom I zu Natriumdichromatkristallen in der normalen technischen Qualität aufgearbetiet (14).

Zur elektrolytischen Herstellung von hochreiner Chromsäure wird die Natriumdichromatlösung des Stoffstroms (I) nach der Kühlfällung (7) in einer mehrstufigen Elektrolyse bei 50 bis 90°C in Zweikammer-Elektrolysezellen mit kationenselektiven Membranen als Trennwände in eine chromsäurehaltige Lösung umgewandelt (15). Die Elektrolyse wird dabei so betrieben, daß die genannte Lösung in die Anodenkammer der ersten Stufe eingeführt wird und nach einer teilweisen Umwandlung des Dichromats in Chromsäure sodann der zweiten Stufe, die eine teilweise weitere Umwandlung in Chromsäure bewirkt, zufließt und so weiter stufenweise bis zur letzten Stufe geführt wird, in welcher ein Umwandlungsgrad des Dichromats in Chromsäure von 55 - 70 % entsprechend einem molaren Verhältnis von Natriumionen zu Chromsäure von 0,45 : 0,55 bis 0,30 : 0,70 erreicht ist. Die Zahl der Stufen kann beliebig groß gewählt werden, wobei eine 6 bis 15-stufige Elektrolyse bevorzugt ist.

Die bei der Elektrolyse gebildete, Chromsäure und einen Rest Natriumdichromat enthaltende Lösung wird durch Eindampfung auf einen Wassergehalt von ca. 12 bis 15 Gew.-% Wasser bei Temperaturen zwischen 55 und 110°C gebracht, wobei der überwiegende Teil der Chromsäure auskristallisiert (16). Die entstandene Suspension wird anschließend durch Zentrifugieren bei 50 bis 110°C in einen im wesentlichen aus kristalliner Chromsäure bestehenden Feststoff und in eine flüssige Phase, im folgenden Mutterlauge genannt, aufgetrennt (17).

Die erhaltene Mutterlauge wird, gegebenenfalls nach Verdünnung mit Wasser, in die Elektrolyse an eine geeignete Stelle, d. h. in eine Stufe möglichst ähnlichen Dichromat-Umwandlungsgrades, zurückgeführt. Um eine starke Anreicherung von Verunreinigungen im System zu vermeiden, wird ein Teil der Mutterlauge ausgeschleust und bei der Restansäuerung im Stoffstrom II verwendet. Die kristalline Chromsäure wird durch einmaliges oder mehrmaliges Waschen mit 10 bis 50 Gew.-% bezogen auf das Gewicht des Feststoffs, gesättigter oder nahezu gesättigter Chromsäurelösung und durch jeweils an jeden Waschvorgang anschließendes Zentrifugieren von anhaftender Mutterlauge befreit. Die gewaschenen reinen Chromsäurekristalle können nun direkt oder nach einer Trocknung ihrer Verwendung zugeführt werden.

Das erfindungsgemäße Verfahren soll anhand der folgenden Beispiele erläutert werden.

Beispiele

In den Beispielen 1 bis 6 wurden Natriumchromatlösungen eingesetzt, die durch Auflösen von Natriumdichromatkristallen aus einem typischen großtechnischen Prozeß hergestellt wurden. In diesen Lösungen wurde durch Zugabe von Natriumhydroxid oder durch Zugabe von Natriummonochromat die in den einzelnen Beispielen angegegebenen Natriummonochromatgehalte eingestellt. Im Beispiel 7 wurde eine teilangesäuerte Natriumchromatlösung eingesetzt, die in einem großtechnischen Verfahren nach der Ansäuerung mit Kohlendioxid erhalten wurde.

Beispiel 1

Bei diesem Beispiel wurden jeweils 200 ml Natriumchromatlösung eingesetzt, in der ca. 90 % des Natriumchromats als Natriumdichromat vorlagen, wobei die Lösung folgende Zusammensetzung aufwies:

| | |
|---|---|
| $Na_2Cr_2O_7 \cdot 2\ H_2O$ | 48,4 Gew.-% |
| $Na_2CrO_4$ | 5,7 Gew.-% |
| $SO_4^{2-}$ | 0,33 Gew.-% |
| Gesamt-Chromatgehalt der Lösung (ausgedrückt in $Na_2Cr_2O_7 \cdot 2\ H_2O$-Äquivalenten) | 53,6 Gew.-% |

Diese Lösung, die in ihrer Zusammensetzung in etwa einer Lösung entspricht, wie sie nach der Ansäuerung mit Kohlendioxid erhältlich ist, wurde auf 0, -5, -10 und -20°C abgekühlt, 60 Minuten bei den genannten Temperaturen gerührt und anschließend bei den jeweiligen Temperaturen mit einer Glasfritte filtriert. Die Ergebnisse des Versuchs sind in Tabelle 1 als Zusammensetzung der filtrierten Lösungen zusammengestellt.

<u>Tabelle 1</u>

| Temperatur | Konzentration $Na_2Cr_2O_7 \cdot 2H_2O$ | Konzentration $Na_2CrO_4$ | Ansäuerungs-grad[*] | Konzentration $SO_4^{2-}$ |
|---|---|---|---|---|
| 0° C | 48,1 Gew.-% | 5,8 Gew.-% | 90 % | 3300 ppm |
| - 5° C | 52,6 Gew.-% | 2,6 Gew.-% | 95,7 % | 200 ppm |
| -10° C | 53,6 Gew.-% | 1,7 Gew.-% | 97,1 % | 180 ppm |
| -20° C | 53,9 Gew.-% | 0,7 Gew.-% | 98,8 % | 84 ppm |

[*] Der sogenannte Ansäuerungsgrad gibt an, wieviel % des Gesamtchromatgehaltes, berechnet als $Na_2Cr_2O_7 \cdot 2 H_2O$-Äquivalente, der Lösung als Dichromat vor-liegen.

Gemäß Tabelle 1 konnte durch Abkühlen der Lösung der Sulfatgehalt von 3300 ppm auf bis 84 ppm $SO_4^{2-}$ bzw. 0,023 Gew.-% $Na_2SO_4$, bezogen auf den Gesamt-Chromatgehalt der Lösung, erniedrigt werden. Zudem ist der Ansäuerungsgrad von 90 auf bis zu 98,8 % angestiegen.

Beispiel 2

Jeweils 200 ml einer Natriumchromatlösung folgender Zusammensetzung wurden auf 0, -10 und -20°C abgekühlt, gerührt und filtriert:

| | |
|---|---|
| $Na_2Cr_2O_7 \cdot 2\ H_2O$ | 48,8 Gew.-% |
| $Na_2CrO_4$ | 10,3 Gew.-% |
| $SO_4^{2-}$ | 0,57 Gew.-% |
| Gesamt-Chromatgehalt | 58,3 Gew.-% |
| ($Na_2Cr_2O_7 \cdot 2\ H_2O$-Äquivalente) | |

Der Ansäuerungsgrad dieser Lösung betrug 83,7 %. Tabelle 2 zeigt die Zusammensetzung der Filtrate als Ergebnisse des Versuchs.

EP 0 368 066 B1

Tabelle 2

| Temperatur | Konzentration $Na_2Cr_2O_7 \cdot 2H_2O$ | Konzentration $Na_2CrO_4$ | Ansäuerungs-grad | Konzentration $SO_4^{2-}$ |
|---|---|---|---|---|
| 0° C | 59,1 Gew.-% | 3,2 Gew.-% | 95,3 % | 320 ppm |
| -10° C | 62,0 Gew.-% | 1,3 Gew.-% | 98,3 % | 130 ppm |
| -20° C | 61,9 Gew.-% | 0,6 Gew.-% | 99,1 % | 60 ppm |

Beispiel 3

Je 200 ml einer Natriumchromatlösung mit einem Ansäuerungsgrad von 85 % und folgender Zusammensetzung wurden auf 0, -5, -10 und -15°C abgekühlt und wie in Beispiel 1 beschrieben aufgearbeitet.

| | |
|---|---|
| $Na_2Cr_2O_7 \cdot 2\ H_2O$ | 41,8 Gew.-% |
| $Na_2CrO_4$ | 8,0 Gew.-% |
| $SO_4^{2-}$ | 0,46 Gew.-% |
| Gesamt-Chromatgehalt $(Na_2Cr_2O_7 \cdot 2\ H_2O$-Äquivalente$)$ | 49,2 Gew.-% |

Die Ergebnisse zeigt Tabelle 3.

Tabelle 3

| Temperatur | Konzentration $Na_2Cr_2O_7 \cdot 2H_2O$ | Konzentration $Na_2CrO_4$ | Ansäuerungs-grad | Konzentration $SO_4^{2-}$ |
|---|---|---|---|---|
| 0° C | k e i n e   F ä l l u n g | | | |
| - 5° C | k e i n e   F ä l l u n g | | | |
| -10° C | 48,0 Gew.-% | 2,0 Gew.-% | 96,3 % | 110 ppm |
| -15° C | 47,9 Gew.-% | 2,0 Gew.-% | 96,2 % | 80 ppm |

Beispiel 4

Die in diesem Beispiel eingesetzte Natriumchromatlösung hatte bei einem Ansäuerungsgrad von 90 % folgende Zusammensetzung:

| | |
|---|---|
| $Na_2Cr_2O_7 \cdot 2\ H_2O$ | 53,0 Gew.-% |
| $Na_2CrO_4$ | 6,4 Gew.-% |
| $SO_4^{2-}$ | 0,28 Gew.-% |
| Gesamt-Chromatgehalt | 58,9 Gew.-% |
| $(Na_2Cr_2O_7 \cdot 2\ H_2O$-Äquivalente) | |

Jeweils 200 ml wurden auf 0, -5, -10, -15 und -20°C abgekühlt und wie beschrieben aufgearbeitet. Die Ergebnisse zeigt Tabelle 4.

Tabelle 4

| Temperatur | Konzentration $Na_2Cr_2O_7 \cdot 2H_2O$ | Konzentration $Na_2CrO_4$ | Ansäuerungs- grad | Konzentration $SO_4^{2-}$ |
|---|---|---|---|---|
| 0° C | keine Fällung | | | |
| − 5° C | keine Fällung | | | |
| −10° C | 57,9 Gew.-% | 1,2 Gew.-% | 98,1 % | 90 ppm |
| −15° C | 58,0 Gew.-% | 0,8 Gew.-% | 98,8 % | 50 ppm |
| −20° C | 58,7 Gew.-% | 0,6 Gew.-% | 99,1 % | 40 ppm |

Beispiel 5

200 ml einer 59,1 %igen Natriumdichromatlösung mit einem geringen Natriummonochromatgehalt von 0,02 Gew.-% und einem Sulfatgehalt von 0,29 Gew-% $SO_4^{2-}$ wurde auf 0, -5, -10, -15 und -20°C abgekühlt und eine Stunde bei den jeweiligen Temperaturen gerührt.

Bei keiner der genannten Temperaturen trat eine Fällung, also auch keine Erniedrigung des Sulfatgehaltes der Lösung ein.

Beispiel 6

200 ml einer Natriumchromatlösung nachfolgender Zusammensetzung wurden auf -20°C gekühlt, gerührt und über eine Glasfritte filtriert.

$Na_2Cr_2O_7 \cdot 2 H_2O$    53,0 Gew.-%
$Na_2CrO_4$           6,4 Gew.-%
$SO_4^{2-}$           0,29 Gew.-%

Durch Einstellen des pH-Wertes auf pH 3,8 mittels fester Chromsäure wurden anschließend die Monochromatanteile der filtrierten Lösung in Dichromat umgewandelt.

Die 75 ppm Sulfat enthaltende Lösung wurde auf ca. 90 Gew.-% $Na_2Cr_2O_7 \cdot 2 H_2O$ durch Verdampfen von Wasser aufkonzentriert und auf 80°C abgekühlt. Dabei fällt Natriumdichromat in Form von $Na_2Cr_2O_7 \cdot 2 H_2O$-Kristallen aus. Nach der Filtration und der Trocknung bei 75°C wiesen die Kristalle einen Rest-Sulfatgehalt von 80 ppm $SO_4^{2-}$ bzw. 0,012 Gew.-% $Na_2SO_4$ auf.

Beispiel 7

Jeweils 200 ml einer zu 93 % angesäuerten technischen Natriumchromatlösung folgender Zusammensetzung wurden auf 0, -10, -15 und -20°C abgekühlt und wie in Beispiel 6 beschrieben aufgearbeitet:

$Na_2Cr_2O_7 \cdot 2 H_2O$              54,7    Gew.-%

$Na_2CrO_4$                     4,5    Gew.-%

$SO_4^{2-}$                      0,934 Gew.-%

Gesamt-Chromatgehalt der Lösung    58,8    Gew.-%

$(Na_2Cr_2O_7 \cdot 2 H_2O$-Äquivalente$)$

Der pH-Wert dieser Lösung betrug 5,9.

Die Ergebnisse des Versuchs in Form der Zusammensetzung der Filtrate sind in Tabelle 5 zusammengestellt.

EP 0 368 066 B1

Tabelle 5

| Temperatur | Konzentration Na$_2$Cr$_2$O$_7$·2H$_2$O | Konzentration Na$_2$CrO$_4$ | Ansäuerungs-grad | pH | Konzentration SO$_4^{2-}$ |
|---|---|---|---|---|---|
| 0° C | 57,0 Gew.-% | 2,6 Gew.-% | 96,0 % | 5,7 | 1900 ppm |
| - 5° C | 57,7 Gew.-% | 2,0 Gew.-% | 96,9 % | 5,6 | 660 ppm |
| -10° C | 59,4 Gew.-% | 1,3 Gew.-% | 98,0 % | 5,4 | 320 ppm |
| -15° C | 59,8 Gew.-% | 1,0 Gew.-% | 98,5 % | 5,2 | 200 ppm |
| -20° C | 60,2 Gew.-% | 0,7 Gew.-% | 98,9 % | 5,0 | 100 ppm |

EP 0 368 066 B1

**Patentansprüche**

1. Verfahren zur Herstellung von Natriumdichromat und Natriumdichromatlösungen durch alkalischen oxidierenden Aufschluß von Chromerzen, Auslaugen des erhaltenden Ofenklinkers mit Wasser, Einstellen des pH-Wertes auf 7 bis 9,5, Abtrennung der unlöslichen Bestandteile durch Filtration, wobei eine Natriummonochromatlösung mit 300 bis 500 g/l $Na_2CrO_4$ erhalten wird, gegebenenfalls Entfernung mehrwertiger Kationen und des Vanadins nach bekannten Verfahren, Umwandlung der Monochromationen dieser Lösung in Dichromationen durch Zugabe einer Säure und/oder durch Elektrolyse und/oder Umsetzung mit Kohlendioxid unter Druck und gegebenenfalls Kristallisation von Natriumdichromat durch Einengen dieser Lösung, dadurch gekennzeichnet, daß die Natriummonochromatlösung vor der Umwandlung in eine Natriumdichromatlösung auf Gehalte von 700 bis 1000 g/l $Na_2CrO_4$ eingeengt wird, die Monochromationen dann zu 75 bis 98 % in Dichromationen umgewandelt werden, die Lösung anschließend durch Abkühlung auf eine Temperatur unter 0°C und Filtration weitestgehend von Natriumsulfat befreit wird und in der verbleibenden Lösung die restlichen Monochromationen durch Elektrolyse und/oder Umsetzung mit Chromsäure und/oder Umsetzung mit Kohlendioxid, gegebenenfalls nach Einengen der Lösung, in Dichromationen umgewandelt werden.

2. Verfahren nach Anspruch 1, dadurch gekennzeichnet, daß die Abkühlung auf Temperaturen von -5°C bis -25°C erfolgt.

3. Verfahren nach Anspruch 1 und 2, dadurch gekennzeichnet, daß die Umwandlung der Monochromationen in Dichromationen der auf Gehalte von 700 bis 1000 g/l $Na_2CrO_4$ eingeengten Natriummonochromatlösung zu 80 bis 95 % erfolgt.

4. Verfahren nach Anspruch 3, dadurch gekennzeichnet, daß die Umwandlung der Monochromationen in Dichromationen der auf Gehalte von 700 bis 1000 g/l $Na_2CrO_4$ eingeengten Natriummonmochromatlösung durch Umsetzung mit Kohlendioxid unter Druck ausgeführt wird und nach Abkühlung und Abtrennung des ausgefallenen Natriumsulfats die restlichen in der Lösung anwesenden Monochromationen durch Elektrolyse in Dichromationen umgewandelt werden.


**Claims**

1. A process for the production of sodium dichromate and sodium dichromate solutions by alkaline oxidizing digestion of chromium ores, leaching out of the resulting furnace clinker with water, pH adjustment to 7 to 9.5, removal of the insoluble constituents by filtration, a sodium monochromate solution containing 300 to 500 g/l $Na_2CrO_4$ being obtained, optional removal of polyvalent cations and vanadium by known processes, conversion of the monochromate ions of this solution into dichromate ions by addition of an acid and/or by electrolysis and/or by reaction with carbon dioxide under pressure and crystallization of sodium dichromate by concentration of this solution, which is characterized in that, before the conversion into a sodium dichromate solution, the sodium monochromate solution is concentrated to contents of 700 to 1000 g/l $Na_2CrO_4$, 75 to 95% of the monochromate ions are then converted into dichromate ions, the solution is subsequently freed as far as possible from sodium sulfate by cooling to a temperature of below 0°C and filtration and the residual chromate ions remaining in the solution are converted into dichromate ions by electrolysis and/or by reaction with carbon dioxide, optionally after concentration of the solution.

2. A process as claimed in claim 1, characterized in that the solution is cooled to temperatures of -5°C to -25°C.

3. A process as claimed in claim 1 and 2, characterized in that 80 to 95% of the monochromate ions in the sodium monochromate solution concentrated to contents of 700 to 1000 g/l $Na_2CrO_4$ are converted into dichromate ions.

4. A process as claimed in claim 3, characterized in that conversion of the monochromate ions into dichromate ions in the sodium monochromate solution concentrated to contents of 700 to 1000 g/l of $Na_2CrO_4$ is carried out by reaction with carbon dioxide under pressure and, after cooling and removal of the sodium sulfate which has precipitated, the residual monochromate ions present in the solution are converted into dichromate ions by electrolysis.


**Revendications**

1. Procédé de production de bichromate de sodium et de solutions de bichromate de sodium par attaque alcaline oxydante de minerais de chrome, traitement par extraction à l'eau des scories de four obtenues, ajustement du pH à une valeur de 7 à 9,5, séparation des constituants insolubles par filtration, ce qui donne une solution de monochromate de sodium à 300-500 g/l de $Na_2CrO_4$, le cas échéant élimination des cations polyvalents et du vanadium par des opérations connues, transformation des ions monochromate de cette solution en ions bichromate par addition d'un acide et/ou par électrolyse et/ou par réaction avec l'anhydride carbonique sous pression et, le cas échéant, cristallisation du bichromate de sodium par concentration de cette solution, caractérisé en ce que la solution de monochromate de sodium est concentrée, avant la transformation en une solution de bichromate de sodium, à des teneurs de 700 à 1000 g/l de $Na_2CrO_4$, les ions monochromate sont ensuite convertis à 75-98 % en ions bichromate, la solution est ensuite débarrassée dans la plus large mesure possible du sulfate de sodium par refroidissement à une température inférieure à 0°C et filtration et les ions monochromate qui subsistent dans la solution restante sont convertis en ions bichromate par électrolyse et/ou par réaction avec l'acide chromique et/ou réaction avec l'anhydride carbonique, le cas échéant après concentration de la solution.

2. Procédé suivant la revendication 1, caractérisé en ce que le refroidissement est effectué à des températures de -5°C à -25°C.

3. Procédé suivant les revendications 1 et 2, caractérisé en ce que la transformation des ions monochromate en ions bichromate de la solution de monochromate de sodium concentrée à des teneurs de 700 à 1000 g/l de $Na_2CrO_4$ est effectuée à 80-95 %.

4. Procédé suivant la revendication 3, caractérisé en ce que la transformation des ions monochromate en ions bichromate de la solution de monochromate de sodium concentrée à des teneurs de 700 à 1000 g/l de $Na_2CrO_4$ est effectuée par réaction avec l'anhydride carbonique sous pression et les ions monochromate qui subsistent dans la solution sont convertis en ions bichromate par électrolyse, après refroidissement et séparation du sulfate de sodium précipité.

FIG. 1

EP 0 368 066 B1